# EUROPEAN PATENT APPLICATION

(11) **EP 3 358 515 A1**
(43) Date of publication of application: **08.08.2018**
(21) Application number: 17154699.7
(22) Date of filing: 03.02.2017
(51) Int. Cl.: G06Q 20/36

(54) **METHOD FOR CRYPTOGRAPHICALLY SIGNING A TRANSACTION**

(71) Applicant: PLC Group AG, 6300 Zug (CH)
(72) Inventor: Bederov, Denis, 10789 Berlin (DE)
(74) Representative: Manitz Finsterwald Patentanwälte PartmbB

(57) **Abstract**

The invention relates to a method for cryptographically signing a transaction, wherein the transaction comprises at least a first and a second piece of information. The method comprises:
- providing a first device and a second device, the second device being separate from the first device,
- storing a private key in the second device,
- producing the first piece of information of the transaction on the first device,
- transmitting the first piece of information to the second device by means of a first one-way communication,
- using the second device to sign the transaction with the private key, and
- transmitting the signed transaction from the second device to the first device by means of a second one-way communication.

## Description

The present invention relates to a method for cryptographically signing a transaction. Such methods are used in a wide variety of fields, particularly for the use with digital currencies, such as bitcoin or litecoin.

Usually an e-wallet is used for preparing and signing a transaction. A transaction facilitates the transfer of "digital money" from an account associated with the e-wallet to a different account.

It is known to use an e-wallet to produce the transaction and to sign the transaction. The signed transaction is then transferred e.g. to a blockchain or a computer network, wherein the signed transaction is processed or verified there.

As the e-wallet that is used to produce and sign the transaction has to be connected to the computer network (e.g. the Internet), the e-wallet is potentially endangered, as its security could be compromised (it could be "hacked"). If the e-wallet is hacked, an attacker could be in the position to alter transactions unnoticed by a user so that a transaction is e.g. redirected to an account of the attacker.

It is therefore the object of the present invention to provide a method for crypto-graphically signing a transaction which provides an increased security.

This object is solved by a method in accordance with claim 1.

According to claim 1 a method for cryptographically signing a transaction is provided, wherein the transaction comprises at least a first and a second piece of information. The method comprises:
- providing a first device and a second device, the second device being separate from the first device,
- storing a private key in the second device,
- producing the first piece of information of the transaction on the first device,
- transmitting the first piece of information to the second device by means of a first one-way communication,
- using the second device to sign the transaction with the private key, and
- transmitting the signed transaction from the second device to the first device by means of a second one-way communication.

The invention is based on the finding that the use of two separate devices, wherein the mentioned one-way communications are used to transmit data from and to the second device, has the advantage that the second device is very difficult to attack. As the second device is used to store the private key and to sign the transaction, the private key and the signing of the transaction are hence strongly secured against attacks.

As a further advantage, the private key never has to be stored on the first device. This reduces the risk that a successful attack on the first device could lead to an extraction of the private key.

To put it short, due to the use of the one-way communications, the second device provides an improved security, wherein the improved security is used to securely process and sign the transaction.

In the following, several aspects of the invention will be described in more detail.

The first and the second device are separate from each other. "Separate" means that no continuous and/or bidirectional data connection exists between the devices. Preferably, the devices can be physically separated and/or the second device can be an offline device. In contrast to the second device which can be offline, the first device can have an online/internet connection.

The first device can be an e-wallet. Correspondingly, the second device can be a (high-secure) e-wallet.

After the first device receives the signed transaction from the second device, the first device can transmit the signed transaction to a computer network, for example to the Internet.

When the second device signs the completed transaction, the second device may generate a hash-value of the transaction (i.e. of the first and second piece of information), wherein the hash-value preferably is encrypted with the private key, e.g. using an asymmetric cryptographic method. Advantageously a personal identification number (PIN) can be required by the second device in order to sign the completed transaction. Only after a correct PIN has been entered by a user of the second device, the second device uses the private key to sign the transaction.

Preferably the first device downloads the first piece of information from a computer network or from the Internet. For example, the input can be downloaded from a blockchain from the Internet and used as the first piece of information for the transaction.

Advantageously the second device only uses the second one-way communication to transmit data to the first device. Correspondingly, the second device may only use the first one-way communication to receive data from the first device. In other words, the second device is an offline or "cold" device. Data exchange with other or further devices may only be possible using the first and/or second one-way communication.

Preferably the second piece of information is added to the transaction on the second device, wherein the second piece of information is preferably added by a user operating the second device. The user may e.g. type in the second piece of information at the second device or use a camera of the second device to scan the second piece of information. For example, the user may type in an amount to be transferred to a different account, wherein the user also types in the account number (e.g. a receiving address), thereby adding the second piece of information to the transaction.

In other words, in addition to the first piece of information, the transaction can require information that is added on the second device (i.e. the second piece of information). Advantageously the transaction is completed on the second device, i.e. the second piece of information added by the second device completes the transaction. Thus, all information required for the transaction that is not part of the first piece of information can be added by the second device. The completion of the transaction on the second device is difficult to attack, as the second device itself is difficult to attack. Thereby, a high security level can be achieved.

As an example, if the transaction is used for the transfer of digital money ("coins"), the first piece of information may comprise an input, wherein the input e.g. lists unspent money (unspent inputs). In other words, the input comprises received money from previous transactions. The second piece of information may comprise an output, wherein the output comprises information about an amount to be transferred to a different account as well as information about the destination account (e.g. an account number). The output can also comprise an amount that will be returned as change, if the amount of the input is greater than the amount to be transferred to the different account. The output can also comprise a transaction fee. The transaction may further comprise a time stamp and/or a public key associated with the private key.

As an alternative to adding the second piece of information on the second device, the second piece of information can be added on the first device, wherein the second piece of information is preferably added by a user operating the first device. Also, the second piece of information can then be transmitted to the second device by means of the first one-way communication. For example, the second piece of information can be entered using a keyboard or touchscreen of the first device. The first and second piece of information can then be transmitted together using the first one-way communication.

Before the transaction is signed on the second device, the second device can display the information comprised in the first and/or second piece of information (e.g. an amount of coins to be transferred and an address of an e-wallet of the receiver). A user can then verify the information and confirm that the information is correct.

It is preferred if the first one-way communication and the second one-way communication correspond to each other. The first and second one-way communication may be identical but reversed in direction of data flow, as will be laid out in more detail below.

Advantageously the first one-way communication and/or the second one-way communication use an optical code, preferably a QR-(Quick Response-)code or a bar-code, which is displayed by one device and recognized by the other device. The first device may for example display a QR-code showing the first piece of information of the transaction, wherein the QR-code is scanned by the second device using a camera of the second device. After the second piece of information has been added and the transaction has been signed using the second device, the second device can show a further QR-code, wherein the further QR-code comprises the information of the signed transaction. The further QR-code can be scanned by the first device using a camera of the first device. Thus, the first and second one-way communications are identical in principle (both use a QR-code which is scanned by a camera) but the direction of data flow is reversed.

Additionally or alternatively to the use of an optical code, an audio transmission can be used for the one-way communications. For example, the first device can use a loudspeaker to playback the audio transmission which is received by a microphone of the second device. The second device can then digitize the received audio transmission in order to determine the first piece of information.

Preferably the first one-way communication and/or the second one-way communication use a limited syntax and/or a limited alphabet. Also, the number of valid commands can be limited to a predefined number, e.g. ten or even only one. The syntax and/or the alphabet can be limited as compared to e.g. a standard TCP/IP (Transmission Control Protocol and Internet Protocol) syntax or a standard ASCII (American Standard Code for Information Interchange) alphabet. For example the first and/or second one-way communication can use only ten or even only one different syntax possibilities or commands. Thereby the effort required to secure all syntax possibilities or commands is greatly reduced. Consequently the risk that potentially harmful code is inserted into the one-way communication (e.g. by buffer overflow) is reduced. The limited commands, syntax and alphabet thus further impede attacks on the second device.

Advantageously the signed transaction is recorded and/or verified in a blockchain, preferably in a blockchain of a digital currency, e.g. bitcoin. After the first device has received the signed transaction from the second device, the first device can establish an Internet connection in order to send the signed transaction to a block-chain. A blockchain is a distributed data base that maintains a continuously-growing list of ordered records (e.g. transactions) called blocks. Each block contains a time stamp and a link to a previous block. After the blockchain has verified that the signed transaction is correct, which can take e.g. about ten minutes, the amount to be transferred to the different account is transferred.

For example in the bitcoin blockchain, a transaction must be verified by miners. The bitcoin protocol is set so that each block takes roughly ten minutes to mine.

Preferably, the transaction is a bitcoin transaction wherein the signing of the transaction comprises the use of an Elliptic Curve Digital Signature Algorithm (ECDSA).

As laid out above, it is preferred if the first piece of information comprises an input, e.g. unspent digital currency, and the second piece of information comprises an output with an amount to be transferred and the destination account. The output can also comprise an amount that will be returned as change, a transaction fee, a time stamp and/or a public key associated with/corresponding to the private key.

Preferably the signed transaction is received by the first device and forwarded to a computer network, wherein the first device then prepares the signed transaction such that the signed transaction can be transmitted to the computer network (e.g. by adapting the signed transaction to a protocol used in the computer network).

Advantageously the private key is transmitted to the second device using a further one-way communication. In the same manner, the public key can be transferred to the first and/or second device using the further one-way communication.

The further one-way communication can be identical to the first and/or second one-way communication and may use a QR-code that is scanned by the second device. The QR-code representing the private key can be scanned e.g. from a piece of paper or from a previous e-wallet. Therefore, the private key has not to be temporarily stored on the potentially endangered first device, thus allowing a secure transmission of the private key.

The private key is preferably transferred to the second device after the second device has been converted to be an offline device. The second device can be converted to be an offline device after a base node software has been installed on the second device. The base node software can facilitate the addition of the second piece of information and the signing of the transaction. The first device can also comprise the base node software. In order to convert the second device to be an offline device, all radio transceivers and/or all bidirectional data interfaces can be switched off (e.g. Bluetooth, Ethernet, Wireless LAN and/or USB).

The second device can also store the public key associated with the private key. Thus, the second device can store a key-pair which comprises a public and a private key.

The second device may be able to export the private and the public key stored in the second device. The export may use e.g. a QR-code shown on a display of the second device.

It is further preferred if the public key associated with the private key is stored in the first device, wherein the public key optionally is used to verify if the private key has been used for signing the transaction. Thus, the public key is optionally used to decrypt the encrypted value of the hash-value of the transaction. If the hash-value of the transaction matches the transaction, it is verified that the private key has been used for signing the transaction. By means of the verification, which can be performed by the first device, the security level can even further be improved, as a (very unlikely) attack to the second device may be identified. It may also be possible to identify an exchange of the second device. In case it is noticed that the second device has been exchanged or compromised, the first device can be locked to prevent further transmission of information to the second device. In addition to the signed transaction, further information identifying the second device can be transmitted from the second device to the first device using the second one-way communication.

Advantageously a smartphone or tablet computer having a camera is used as the second device, wherein preferably all radio transceivers and all bidirectional data interfaces are switched off. In the same way, the first device can be a smartphone or tablet computer having a camera, as well. For example, an old, outdated or cheap smartphone can be used as the second device. Even those smartphones usually comprise a camera. The use of such an old or outdated smartphone allows the method to be performed on relatively cheap hardware.

Preferably a user is required to start and/or to facilitate the first and/or second one-way communication. In other words, the first and/or second one-way communication does not start without an interaction of the user and/or is not possible without the user. For example, the user is required to hold the screen of the first device such that it can be scanned by a camera of the second device, in order to facilitate the first one-way communication. The requirement that a user has to be present for the communication contributes to the security level of the method, as no communication with the second device can be established from a remote position.

The invention also relates to a system for cryptographically signing a transaction. The system comprises a first device and a second device, wherein the second device is separate from the first device, wherein a private key is stored in the second device. The first device is adapted to produce a first piece of information of a transaction and to transmit the first piece of information to the second device by means of a first one-way communication. The second device is adapted to sign the transaction with the private key and to transmit the signed transaction from the second device to the first device by means of a second one-way communication. The advantages and embodiments described above with respect to the inventive method also apply to the inventive system.

Various features and advantages of the present invention will become more apparent from the following description and accompanying drawings wherein:
- Fig. 1: shows a first and second device;
- Fig. 2: shows the transmission of an incomplete transaction from the first to the second device; and
- Fig. 3: shows the transmission of a signed transaction from the second device to the first device.

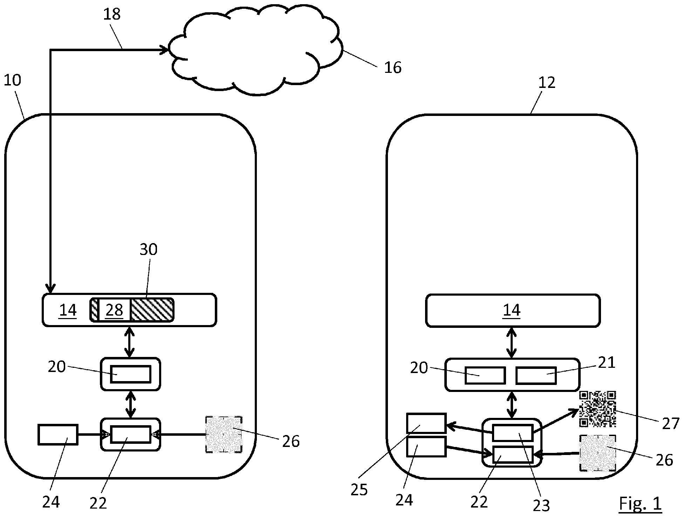

Fig. 1 shows a first device 10 and a second device 12, wherein the first device 10 and the second device 12 are each formed by a smartphone, each having a camera and a display (not shown).

The first device 10 and the second device 12 both comprise a base node software 14. The base node software 14 facilitates the functionalities described below.

The first device 10 is connected to the Internet 16 via a bidirectional data link 18. Within the first device 10 a public key 20 is stored. The public key 20 can be imported using a key import module 22 which receives the public key 20 e.g. from a hexadecimal input 24 or from a scanned QR-code via a QR-scan 26.

The second device 12 also stores the public key 20. In addition to the public key 20, the second device 12 stores a private key 21, wherein the private key 21 corresponds to the public key 20. Identical to the first device 10, the second device 12 also comprises a key import module 22, a hexadecimal input 24 and the possibility to import the public key 20 and the private key 21 using a QR-scan 26 (e.g. from a previous e-wallet or crypto wallet).

The second device 12 allows exporting the public key 20 and the private key 21 using a key export module 23 which is in connection with a hexadecimal output 25. The hexadecimal output 25 may show a hexadecimal number corresponding to the keys 20, 21 on a display of the second device 12. The display of the second device 12 can also show an export QR-code 27 holding information about the public and private key 20, 21.

In order to produce a transaction, e.g. for transferring bitcoin from an account linked to the first device 10 to a different account, the first device 10 downloads a first piece of information 28 from the Internet 16. The first piece of information 28 comprises information about unspent inputs from the account linked to the first device 10. The first piece of information 28 is used to create an incomplete transaction 30.

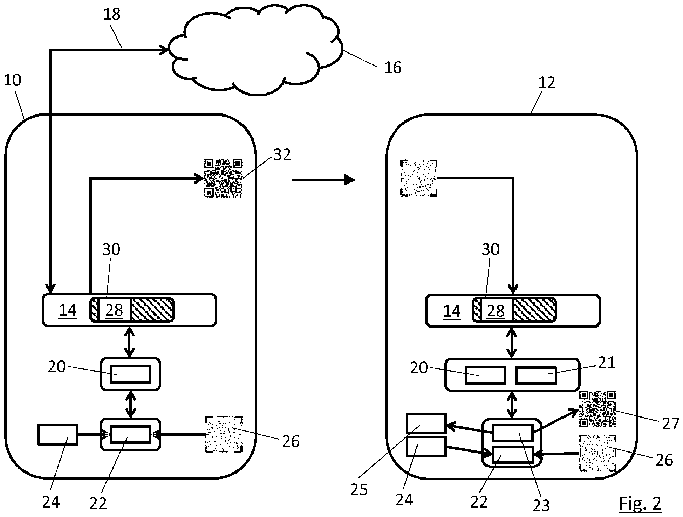

The incomplete transaction 30 is then transformed into a first QR-code 32, as shown in Fig. 2. The first QR-code 32 is displayed on the first device 10 and scanned with the camera of the second device 12. Thereby the second device 12 receives the incomplete transaction 30.

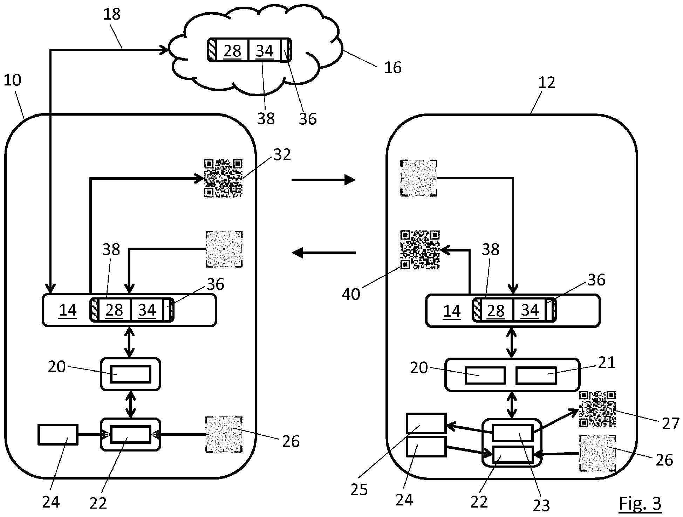

When the incomplete transaction 30 is received by the second device 12, a user (not shown) of the second device 12 is prompted to enter an amount of bitcoin to be transferred and an account to which the bitcoin is to be transferred (i.e. the destination account). The amount and the account can be displayed on the second device 12 so the user can verify the entered information. Once the user has verified the amount and the destination account, the amount, the destination account, a change, a transaction fee, the public key 20 and a time stamp are added as a second piece of information 34 to the incomplete transaction 30, as shown in Fig. 3.

The user is then prompted to enter a personal identification number (PIN) which allows the private key 21 to be used by the base node software 14. The base node software 14 then uses the private key 21 to sign the transaction and to add a cryptographic signature 36, thus creating a signed transaction 38.

As shown in Fig. 3, the signed transaction 38 is then transformed into a second QR-code 40 which is shown on the display of the second device 12 and scanned by a camera of the first device 10. Thereby the signed transaction 38 is transferred to the first device 10. The first device 10 then transmits the signed transaction 38 to the Internet 16, wherein the signed transaction 38 is processed by a blockchain (not shown). Once the blockchain has verified the signed transaction 38, the amount of bitcoin intended to be transferred is transferred to the destination account.

It is apparent from Figs. 1 to 3 that the second device only exchanges data using one-way communications, namely the scanning of QR-codes 26, 32 and the display of QR-codes 27, 40. The second device 12 is thus offline and practically cannot be hacked or attacked. Thereby a very high security of the signing of the transaction can be achieved. The security is further improved as the second piece of information 34 has to be entered at the heavily protected second device 12.

### List of reference numerals

- 10: first device
- 12: second device
- 14: base node software
- 16: Internet
- 18: bidirectional data link
- 20: public key
- 21: private key
- 22: key import module
- 23: key export module
- 24: hexadecimal input
- 25: hexadecimal output
- 26: QR-scan
- 27: export QR-code
- 28: first piece of information
- 30: incomplete transaction
- 32: first QR-code
- 34: second piece of information
- 36: cryptographic signature
- 38: signed transaction
- 40: second QR-code

## Claims

1. A method for cryptographically signing a transaction (30, 38), wherein the transaction (30, 38) comprises at least a first and a second piece of information (28, 34), the method comprising:
- providing a first device (10) and a second device (12), the second device (12) being separate from the first device (10),
- storing a private key (21) in the second device (12),
- producing the first piece of information (28) of the transaction (30, 38) on the first device (10),
- transmitting the first piece of information (28) to the second device (12) by means of a first one-way communication (32),
- using the second device (12) to sign the transaction (30, 38) with the private key (21), and
- transmitting the signed transaction (38) from the second device (12) to the first device (10) by means of a second one-way communication (40).

2. The method of claim 1, wherein
the first device (10) downloads the first piece of information (28) from a computer network or from the Internet (16).

3. The method of claim 1 or 2, wherein
the second device (12) only uses the second one-way communication (40) to transmit data to the first device (10) and/or wherein the second device (12) only uses the first one-way communication (32) to receive data from the first device (10).

4. The method of at least one of the preceding claims, wherein
the second piece of information (34) is added to the transaction (30, 38) on the second device (12), wherein the second piece of information (34) is preferably added by a user operating the second device (12).

5. The method of at least one of claims 1 to 3, wherein
the second piece of information (34) is added to the transaction (30, 38) on the first device (10), wherein the second piece of information (34) is preferably added by a user operating the first device (10).

6. The method of claim 5, wherein
also the second piece of information (34) is transmitted to the second device (12) by means of the first one-way communication (32).

7. The method of at least one of the preceding claims, wherein
the first one-way communication (32) and the second one-way communication (40) correspond to each other.

8. The method of at least one of the preceding claims, wherein
the first one-way communication and/or the second one-way communication use an optical code, preferably a QR (Quick Response)-code (32, 40) or a barcode, which is displayed by one device (10, 12) and recognized by the other device (10, 12).

9. The method of at least one of the preceding claims, wherein
the signed transaction (38) is recorded and/or verified in a blockchain, preferably of a digital currency.

10. The method of at least one of the preceding claims, wherein
the first piece of information (28) comprises an input, e.g. unspent digital currency, and the second piece of information (34) comprises an output with an amount to be transferred to a different account.

11. The method of at least one of the preceding claims, wherein
the signed transaction (38) is received by the first device (10) and forwarded to a computer network (16), wherein the first device (10) prepares the signed transaction (38) such that the signed transaction (38) can be transmitted to the computer network (16).

12. The method of at least one of the preceding claims, wherein
the private key (21) is transmitted to the second device (12) using a further one-way communication (26).

13. The method of at least one of the preceding claims, wherein
a smartphone or tablet computer having a camera is used as the second device (12), wherein preferably all radio transceivers and all bidirectional data interfaces are switched off.

14. The method of at least one of the preceding claims, wherein
a user is required to start and/or to facilitate the first and/or second one-way communication (32, 40).

15. System for cryptographically signing a transaction, comprising a first device (10) and a second device (12) which is separate from the first device (10), wherein
- a private key (21) is stored in the second device (12),
- the first device (10) is adapted to produce a first piece of information (28) of a transaction (30, 38) and to transmit the first piece of information (28) to the second device (12) by means of a first one-way communication (32),
- the second device (12) is adapted to sign the transaction (30, 38) with the private key (21) and to transmit the signed transaction (38) from the second device (12) to the first device (10) by means of a second one-way communication (40).
